# EUROPEAN PATENT SPECIFICATION

(11) **EP 0 581 994 B1**
(45) Date of publication and mention of the grant of the patent: **28.04.1999**
(21) Application number: 92113511.7
(22) Date of filing: 07.08.1992
(51) Int. Cl.: H04N 7/087

(54) **Improved teletext receiver with memory update**
Verbesserter Teletextempfänger mit Speicheraktualisierung
Récepteur amélioré de télétexte avec actualisation de mémoire

(43) Date of publication of application: 09.02.1994
(73) Proprietor: WHITELAY INTERNATIONAL LIMITED, Dublin 2 (IE)
(72) Inventor: Lanyon, James Reginald George, Sark, Channel Islands (GB)
(74) Representative: Gaggini, Carlo, Dipl.Ing.

(56) References cited:
- EP-A- 0 406 972
- EP-A- 0 489 386
- PATENT ABSTRACTS OF JAPAN vol. 7, no. 272 (E-214)3 December 1983

## Description

The present invention refers to a receiver of a system for the transmission of information, inserted in a television signal, that is cyclically repeated, and is represented by a plurality of pages, each characterised by a number, and can be selected by the user, the receiver comprises memory means for memorising the numbers of the pages received.

It is known that in various European countries, among which Italy, systems are in use that allow for the transmission of additional information, inserted in the video signal (under the form of encoded digital signals) in some of free horizontal lines during the vertical return period. Such systems for example are called "teletext" in Great Britain, "televideo" in Italy, "Videotext" in Germany, etc. These encoded signals, on command of the user, can be extracted and decoded by an appropriate decoding circuit, known, and normally realised by means of monolithic integrated circuits, included in the circuitry of the television or of the video recorder, so as to allow for displaying on the television screen one of the information pages transmitted, that may contain both text and graphics.

There are several hundred pages transmitted (for example 800 in Italy), and are grouped in subjects (for example: latest news: pages. 101-102, politics: pages. 105-120, sport: pages. 200-230, games: pages. 400-430, and so on).

On the first page (page 100) the general subject index is usually contained, and in the successive pages the sub-indexes for each subject, with the numbers of the single pages listed.

Whenever the user wishes receive a certain page, three numbered buttons must be pressed in sequence, so as to form the three digit number corresponding to the page that is desired to be read.

The decoder, that continually receives the transmitted pages, one after the other, from the broadcaster, as soon as it receives the one characterised by the number of digits keyed in by the user, it provides for its acquisition. It may however occur that the page characterised by the sequence of formulated digits is not in reality transmitted; in this case the decoder remains on hold for an indefinite period of time until its arrival; in practice however, the decoder remains blocked until the user realises and provides for modifying the assigned command.

In particular this can take place with apparatus furnished with the so called "next" button that automatically provides for generating, when depressed by the user, the number of the three successive digits to that of the page being displayed in that instant; a receiver of this type is described for example in the Italian patent IF-A-1.203.580.

It has been proposed in the German Patent Application DE-A-36 22.308 to memorise the numbers of the pages that are received, so as to have a schedule of the transmitted pages available. However the problem of continually updating such schedule exists, as pages of the cycle are continually removed and added. This means that it is practically impossible to realise the proposed system, due to the lack of sufficient instructional explanations. This problem is also addressed in EP-A-406 972.

It is also known that at least two different systems have been proposed to obviate the mentioned drawbacks of the normal teletext system; such systems, known respectively with the initials FLOF and TOP, provide for inserting additional information at the transmission site, that, appropriately acquired and elaborated at the receiving site, allow for minimising the inconveniences to the user. However such known systems are incompatible between themselves, and have practically only been adopted in the promoting countries, consequently the problem of a lack of unification exists.

The aim of the present invention is to indicate a improved receiver for a teletext transmissions system that utilises a simple memorising system that does however allow for the continuous updating of the situation of the pages transmitted, substantially without delays.

In view of realising such aims the present invention has as its object an improved receiver of a system for the transmission of information, inserted in a television signal, that is cyclically repeated, and is represented by a plurality of pages, each characterised by a number, and can be selected by the user, the receiver comprises memory means for memorising the numbers of the pages received, characterised in the fact that the situation of the pages effectively present in the transmission cycle is continually updated in memory by means of a procedure that provides for the continuous surveillance of the pages effectively transmitted.

Such a receiver is defined in claim 9 and implements the method defined in claim 1.

The characteristics and advantages of the improved receiver for teletext transmissions according to invention will appear in the following description, executed with reference to the annexed drawings, that is intend to be supplied as a pure and not-limiting example, in which:
figure 1 represents the block diagram of the part of the circuit according to invention of a Teletext signals receiver;
figure 2 schematically represents the command unit of the receiver of figure 1;
figure 3 schematically represents the logic control circuit for the part being relevant in order to achieve the invention.

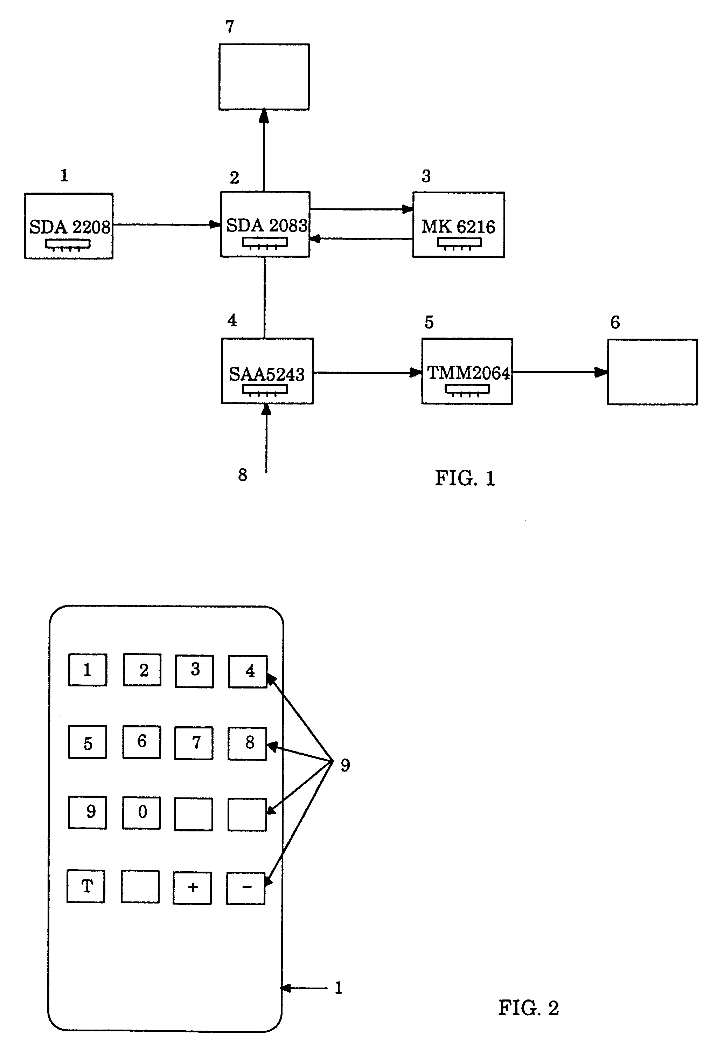

In Figure 1, with the reference number 1 the command unit is indicated, with number 2 the control unit, with number 3 a read and write memory (of the type commonly called RAM -Random Access Memory-) having a capacity of at least 800 characters for memorising a table indicating the situation of the pages in cycle; said memory may be for example of the type MN4216 or of the type MK6216 or any equivalent type; it can also be included in the control units 2.

With number 4 the teletext decoder is indicated, with number 5 the page memory (eventually, of four or eight pages), with number 6 the system of displaying of the contents of the indicated page is indicated, and with number 7 a supplementary display for displaying the page number.

Finally with number 8 terminal is indicated to which the teletext signal in video-frequency is present.

The command unit 1 may be of the type known, for example the keyboard of a remote control; it shall contain the usual numbered buttons from 0 to 9 and the other usual buttons for the command of the receiver, among which two buttons tagged with the symbols "+" and "-" or with other equivalent symbols, as "left handed arrow" and "right handed arrow", and a button that enables the teletext reception (that may be tagged with the letter "T" or with an equivalent symbol); in figure 2, that schematically represents the keyboard of a possible command unit, the above mentioned keys are in fact indicated; the transmitter of the remote control signals may be for example of the known type SDA 2208.

The decoder 4, the page memory 5 and the display means 6 can be of the type known normally used in known teletext receivers; for example the decoder 4 may be of the known type SAA 5243; the memory may be of the type TMM 2064P; the display means 6 is normally represented by the picture-tube of the television.

The display 7 may be a known display of three digits of the LED type of 7 segments.

The control unit 2 will be advantageously represented by a microprocessor, of a known type, suitable for the management of the television, for example of the type SDA 2083.

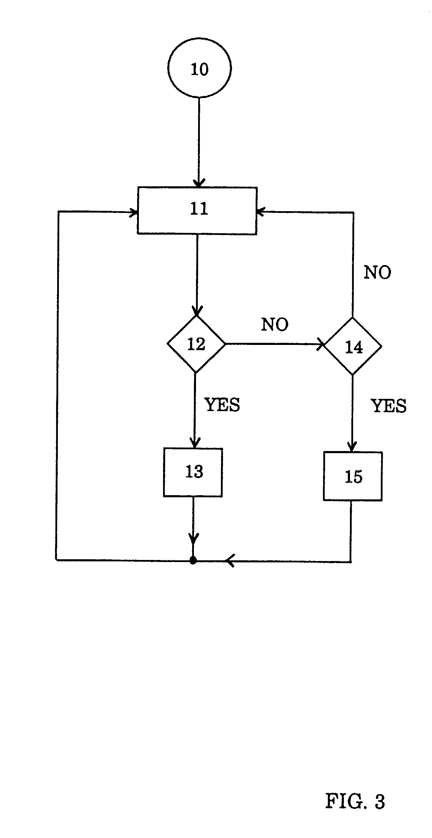

The functioning of the described television will now be explained in reference to figure 3 that schematically represents the logic control circuit for the part being relevant in order to achieve the invention.

In Figure 3 the reference number 10 indicates the starting block, for example the turning on of the television; from block 10 the control passes to the successive block 11.

Block 11 executes the initiation of the memory cells 3, writing in every cell the zero value; sets to zero a second counter timer and the control therefore passes to block 12.

The block 12 is a control block; it in fact controls whether a page has been received by the decoder 4; if affirmative (Yes exit) the control passes to block 13, in the negative case (NO exit) it then passes to block 14.

The block 13 writes a number being within 2 and 7 (for example 3) in the memory cell whose address corresponds to the number of the page received; control then passes back to block 12.

Block 14 is a control block; it in fact controls whether the timer indicates that at least 20 seconds have passed from when it had been set to zero the last time that block 15 had control; in the affirmative case (YES exit) control passes to block 15, in the negative case (NO exit) control returns to the block 12.

Block 15 provides for decreasing by one unit the different values from zero of all the cells of the memory 3; sets the timer to zero and returns the control to block 12.

As a result of the description, the functioning of the circuit is the following:
- all the cells of the memory 3 are initially (upon the turning on of the receiver) brought to the value 0, corresponding to "page not present in the cycle";
- when a page is received, the relative table value is brought to the value 3;
- every 20 seconds a suitable routine decreases by one unit the value of all the cells of the memory not having zero value;
- it is thus controlled that the cells relative to present pages in the cycle do not ever descend to zero, inasmuch that every cycle the values are brought to 3; instead whenever a page is removed from the cycle, the relative value is set to zero in three cycles, or in 60 seconds.

The fact that the written value in a cell is set to zero only when after three consecutive cycles a certain page has not been received is a prudential measure of avoiding that, due to a momentary interruption of the transmission, the memory 3 be completely cancelled. When a page is request by the user, either by calling direct, or indirectly (use of the button "next" or "+"), the control units 2 controls whether the relative table value is zero; in the affirmative it provides for displaying on the screen a warning message of the type "The requested page is not being actually transmitted; the successive transmitted page has the number ..."; and provides automatically for searching, acquiring and to displaying said successive page effectively transmitted. Naturally if the relative value to the requested page is greater than zero, the control units 2 provides for regularly searching, acquiring and displaying the requested page.

In a preferred version of the invention, having a memory 5 available capable of storing more than one page, the acquisition and memorising of the effectively successive page to that shown, would be executed automatically by the control unit without waiting for the depressing of the "next" button, thus obtaining the possibility of an immediate display, as soon as requested.

As is clear from the executed description, the improved receiver for teletext transmissions according to the invention, allows in a simple, but effective way, to avoid useless searches for pages not transmitted, being always, practically without delay, in possession of an updated situation of the pages effectively transmitted in cycle.

It is clear that, with the present realisation, it is possible construct a television signals receiver, also being multi-standard, that gives to the user the possibility to enjoying the aforementioned technical prerogative, independently from the fact that the teletext signal is transmitted according to German system TOP or the English system FLOF or any other system.

It is obvious that, taking into account the principle of the invention, numerous variants are possible to the constructive characteristics of the improved receiver for teletext transmissions described as an example, without however departing from the limits of the present invention.

For example the possibility can be cited that, in the case of the requested page not being present in cycle, the control unit is limited to displaying the warning message, and, eventually, the number of the successive page effectively present, without automatically searching for and displaying it, but only upon specific request.

Another variant can consist in that the memory 3 is dimensioned solely to contain 2 bits for every page transmitted; in this case the control unit shall provide for putting both the bits to the value 1 upon receiving the relative page, and to decrease every cycle, considering the two bits as a two digit binary number of (11=3; 10=2; 01=1; 00=0).

## Claims

1. Method for the reception of information inserted in a television signal, said information being cyclically repeated and represented by a plurality of pages, each one identified by a number, and selectable by the user, a receiver therefor comprising a control unit (2) and memory means (3) for memorising the numbers of the pages received, wherein said memory means contain a table of characters, the number of which corresponds to the number (800) of the pages that can be theoretically transmitted, the situation of the pages effectively present in the transmission cycle being continually updated in memory, and upon turning on the receiver said control unit writes in every cell of said memory means the value of zero, characterised in that:
- every time a page is received the value of the corresponding cell of said memory means is brought to a value greater than 1,
- at predetermined intervals, each interval corresponding substantially to the duration of a transmission cycle, the value of every memory cell being different from zero is decreased by a unit.

2. Method for the reception of information, according to claim 1, characterised in that said value greater than 1 is a value comprised between 2 and 7.

3. Method for the reception of information, according to claim 1, characterised in that at the moment in which a page is requested by the user said control unit (2) provides for verifying the value of the correspondent cell of the table and, if the value is greater than zero, the requested page is normally searched, acquired and displayed.

4. Method for the reception of information, according to claim 1, characterised in that at the moment in which a page is requested by the user said control unit (2) provides for verifying the value of the correspondent cell of the table and, if the value is zero, a message is shown warning that the requested page is not present.

5. Method for the reception of information, according to claim 3, characterised in that at the moment in which a page is displayed, said control unit (2) provides for searching, acquiring and memorising the page successive to that displayed, effectively present in transmission, i.e. the next whose value in the table is greater than zero, in order that it be immediately available in the case of the button "next" being depressed.

6. Method for the reception of information, according to claim 4, characterised in that, together with said warning message, the number of the successive page effectively present in the transmission cycle, i.e. the next whose value in the table is greater than zero, is also displayed.

7. Method for the reception of information, according to claim 5, characterised in that, after said warning message, is also displayed, premising the search and acquisition, the successive page effectively present in the transmission cycle, i.e. the next whose value in the table is greater than zero.

8. Method for the reception of information, according to claim 1, characterised in that said table contains a binary two bits number for every page transmitted.

9. Apparatus for the reception of information, according to the method of one or more of the preceding claims, the apparatus comprising a control unit (2) and memory means (3) for memorising the numbers of the pages received, wherein said memory means contain a table of characters, the number of which corresponds to the number (800) of the pages that can be theoretically transmitted, the situation of the pages effectively present in the transmission cycle being continually updated in memory, and upon turning on the receiver said control unit writes in every cell of said memory means the value of zero, characterised in that:
- every time a page is received the value of the corresponding cell of said memory means is brought to a value greater than 1,
- at predetermined intervals, each interval corresponding substantially to the duration of a transmission cycle, the value of every memory cell being different from zero is decreased by a unit.

## Patentansprüche

1. Verfahren zum Empfangen von in einem Fernsehsignal enthaltener Information, die zyklisch wiederholt wird und auf einer Vielzahl von Seiten dargestellt ist, wobei jede Seite mittels einer Nummer identifiziert wird, die der Benützer abrufen kann, und wobei der dafür eingerichtete Empfänger eine Steuerungs-Einheit (2) und Speicher-Mittel (3) zum Speichern der Nummern der empfangenen Seiten umfasst, wobei die genannten Speicher-Mittel eine Tabelle von Zeichen enthalten, deren Anzahl der Anzahl (800) der Seiten entspricht, die theoretisch übermittelt werden können, wobei aber die Lage der in jedem Uebermittlungs-Zyklus wirklich vorhandenen Seiten laufend im Speicher nachgeführt wird, und wobei beim Einschalten des Empfängers die genannte Steuerungs-Einheit in jede Zelle der genannten Speicher-Mittel den Wert Null einträgt,
**dadurch gekennzeichnet, dass**
- jedesmal, wenn eine Seite empfangen wird, der Wert in der entspre chenden Zelle der genannten Speicher-Mittel auf einen Wert gebracht wird, der grösser als 1 ist, und dass
- in voraus festgelegten Intervallen, wobei jedes Intervall im Wesentli chen der Dauer eines Uebermittlungs-Zyklus entspricht, der Wert in je der Speicher-Zelle um eine Einheit verringert wird, sofern er von Null verschieden ist.

2. Verfahren zum Empfangen von Information gemäss dem Anspruch 1, dadurch gekennzeichnet, dass der genannte Wert, der grösser als 1 ist, ein Wert ist, der zwischen 2 und 7 liegt.

3. Verfahren zum Empfangen von Information gemäss dem Anspruch 1, dadurch gekennzeichnet, dass im Moment, in dem der Benützer eine Seite abruft, die Steuerungs-Einheit (2) dafür sorgt, dass der Wert in der ent sprechenden Zelle der Tabelle überprüft wird und, wenn der Wert grösser als Null ist, die abgerufene Seite in der normalen Weise gesucht, hervorgeholt und angezeigt wird.

4. Verfahren zum Empfangen von Information gemäss dem Anspruch 1, dadurch gekennzeichnet, dass im Moment, in dem der Benützer eine Seite abruft, die Steuerungs-Einheit (2) dafür sorgt, dass der Wert in der entsprechenden Zelle der Tabelle überprüft wird und, wenn der Wert Null ist, wird eine Meldung angezeigt mit der Warnung, dass die abgerufene Seite nicht vorhanden ist.

5. Verfahren zum Empfangen von Information gemäss dem Anspruch 3, dadurch gekennzeichnet, dass Verfahren zum Empfangen von Information gemäss dem Anspruch 1, dadurch gekennzeichnet, dass im Moment, in dem eine Seite angezeigt ist, die genannte Steuerungs-Einheit (2) dafür sorgt, dass die Seite, die auf die angezeigte Seite folgt, sofern sie wirklich vorhanden ist, d.h. die nächsffolgende Seite, deren Wert in der Tabelle grösser ist als Null, gesucht, hervorgeholt und gespeichert wird, damit diese Seite sofort verfügbar ist, falls die Taste "next" (bzw. "weiter") gedrückt wird.

6. Verfahren zum Empfangen von Information gemäss dem Anspruch 4, dadurch gekennzeichnet, dass zusammen mit der genannten Meldung der Warnung auch die Seitennummer der nächsten im Uebertragungs-Zyklus wirklich übertragenen Seite, d.h. die nächste Seite, deren entsprechender Wert in der Tabelle grösser als Null ist, angezeigt wird.

7. Verfahren zum Empfangen von Information gemäss dem Anspruch 5, dadurch gekennzeichnet, dass nach der genannten Meldung der Warnung nach dem Suchen und Hervorholen auch die nächste Seite, die im Uebertragungs-Zyklus wirklich übertragen wurde, d.h. die nächste Seite, deren entsprechender Wert in der Tabelle grösser als Null ist, angezeigt wird.

8. Verfahren zum Empfangen von Information gemäss dem Anspruch 1, dadurch gekennzeichnet, dass die genannte Tabelle für jede übertragene Seite eine binär mit zwei Bit notierte Zahl enthält.

9. Vorrichtung zum Empfangen von Information entsprechend dem Verfahren gemäss einem oder mehreren der vorangehenden Ansprüchen, wobei die Vorrichtung eine Steuerungs-Einheit (2) und Speicher-Mittel (3) zum Speichern der Seitennummern der empfangenen Seiten aufweist, wobei die genannten Speicher-Mittel eine Tabelle von Zeichen enthalten, deren Anzahl der Anzahl (800) der Seiten entspricht, die theoretisch übermittelt werden können, wobei aber die Lage der in jedem Uebermittlungs-Zyklus wirklich vorhandenen Seiten laufend im Speicher nachgeführt wird, und wobei beim Einschalten des Empfängers die genannte Steuerungs-Einheit in jede Zelle der genannten Speicher-Mittel den Wert Null einträgt,
**dadurch gekennzeichnet, dass**
- jedesmal, wenn eine Seite empfangen wird, der Wert in der entspre chenden Zelle der genannten Speicher-Mittel auf einen Wert gebracht wird, der grösser als 1 ist, und dass
- in voraus festgelegten Intervallen, wobei jedes Intervall im Wesentli chen der Dauer eines Uebermittlungs-Zyklus entspricht, der Wert in je der Speicher-Zelle um eine Einheit verringert wird, sofern er von Null verschieden ist.

## Revendications

1. Procédé pour la réception d'information introduite dans un signal de télévision, ladite information étant cycliquement répétée et représentée par une pluralité de pages, chacune identifiée par un numéro et sélectionnable par l'utilisateur, un récepteur pour celle-ci, comportant une unité de commande (2) et des moyens à mémoire (3) pour mémoriser les numéros des pages reçues, dans lequel lesdits moyens à mémoire contiennent un tableau de caractères dont le nombre correspond au nombre (800) des pages qui peuvent être théoriquement transmises, la situation des pages effectivement présentes dans le cycle de transmission étant actualisée en continu dans la mémoire et, lors de l'activation du récepteur, ladite unité de commande écrit dans chaque cellule desdits moyens à mémoire la valeur zéro, caractérisé en ce que :
- chaque fois qu'une page est reçue, la valeur de la cellule correspondante desdits moyens à mémoire est amenée à une valeur supérieure à 1,
- à des intervalles prédéterminés, chaque intervalle correspondant sensiblement à la durée d'un cycle de transmission, la valeur de chaque cellule de mémoire qui est différente de zéro est diminuée d'une unité.

2. Procédé pour la réception d'information selon la revendication 1, caractérisé en ce que ladite valeur supérieure à 1 est une valeur comprise entre 2 et 7.

3. Procédé pour la réception d'information selon la revendication 1, caractérisé en ce que, au moment où une page est demandée par l'utilisateur, ladite unité de commande (2) effectue une vérification de la valeur de la cellule correspondante du tableau et, si la valeur est supérieure à zéro, la page demandée est normalement cherchée, acquise et affichée.

4. Procédé pour la réception d'information selon la revendication 1, caractérisé en ce que, au moment où une page est demandée par l'utilisateur, ladite unité de commande effectue une vérification de la valeur de la cellule correspondante du tableau et, si la valeur est zéro, un message est montré pour avertir que la page demandée n'est pas présente.

5. Procédé pour la réception d'information selon la revendication 3, caractérisé en ce que, au moment où une page est affichée, ladite unité de commande (2) effectue une recherche, une acquisition et une mémorisation de la page suivant celle qui est affichée, effectivement présente dans la transmission, c'est-à-dire la suivante dont la valeur dans le tableau est supérieure à zéro, de manière qu'elle soit immédiatement disponible dans le cas où le bouton "suite" est enfoncé.

6. Procédé pour la réception d'information selon la revendication 4, caractérisé en ce que, conjointement avec ledit message d'avertissement, le numéro de la page suivante effectivement présente dans le cycle de transmission, c'est-à-dire la suivante dont la valeur dans le tableau est supérieure à zéro, est également affiché.

7. Procédé pour la réception d'information selon la revendication 5, caractérisé en ce que, après ledit message d'avertissement, il est également affiché, en prémisse à la recherche et à l'acquisition, la page suivante effectivement présente dans le cycle de transmission, c'est-à-dire la suivante dont la valeur dans le tableau est supérieure à zéro.

8. Procédé pour la réception d'information selon la revendication 1, caractérisé en ce que ledit tableau contient un nombre binaire à deux bits pour chaque page transmise.

9. Appareil pour la réception d'information, selon le procédé de l'une au moins des revendications précédentes, l'appareil comportant une unité de commande (2) et des moyens à mémoire (3) pour mémoriser les numéros des pages reçues, dans lequel lesdits moyens à mémoire contiennent un tableau de caractères dont le nombre correspond au nombre (800) des pages qui peuvent être théoriquement transmises, la situation des pages effectivement présentes dans le cycle de transmission étant actualisée en continu dans la mémoire et, lors de l'activation du récepteur, ladite unité de commande écrit dans chaque cellule desdits moyens à mémoire la valeur zéro, caractérisé en ce que :
- chaque fois qu'une page est reçue, la valeur de la cellule correspondante desdits moyens à mémoire est amenée à une valeur supérieure à 1,
- à des intervalles prédéterminés, chaque intervalle correspondant sensiblement à la durée d'un cycle de transmission, la valeur de chaque cellule de mémoire qui est différente de zéro est diminuée d'une unité.
